# EUROPÄISCHE PATENTSCHRIFT

(11) **EP 3 004 812 B1**
(45) Veröffentlichungstag und Bekanntmachung des Hinweises auf die Patenterteilung: **31.10.2018**
(21) Anmeldenummer: 14725145.8
(22) Anmeldetag: 19.05.2014
(51) Int. Cl.: G01F 1/66

(54) **ULTRASCHALL-DURCHFLUSSMESSGERÄT**
ULTRASONIC FLOWMETER
DÉBITMÈTRE ULTRASONIQUE

(30) Priorität: 07.06.2013 DE 102013105922
(43) Veröffentlichungstag der Anmeldung: 13.04.2016
(73) Patentinhaber: Endress+Hauser Flowtec AG, 4153 Reinach (BL) (CH)
(72) Erfinder: KISSLING, Beat, CH-4153 Reinach (CH); MÜLLER, Quirin, CH- 4112 Bättwil (CH); GRUNWALD, Sascha, 79585 Steinen (DE); STEINER, Fabian, CH-5035 Unterentfelden (CH); BROBEIL, Wolfgang, 79576 Weil am Rhein (DE)
(74) Vertreter: Andres, Angelika Maria
(86) Internationale Anmeldenummer: PCT/EP2014/060185
(87) Internationale Veröffentlichungsnummer: WO 2014/195118

(56) Entgegenhaltungen:
- EP-A1- 2 270 439
- WO-A1-2010/069867
- WO-A1-2010/069869
- DE-A1- 4 010 148
- DE-A1- 4 437 588
- DE-A1- 10 344 893
- DE-A1- 19 808 701
- US-A- 4 103 551

## Beschreibung

Die vorliegende Erfindung betrifft ein Verfahren zum Herstellen eines Messrohrs für ein Ultraschall-Durchflussmessgerät nach dem Oberbegriff des Anspruchs 1.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem elektromechanischen Wandlerelement, z.B. ein piezoelektrisches Element, und einer Koppelschicht. Im elektromechanischen Wandlerelement werden die Ultraschallwellen als akustische Signale erzeugt und über die Koppelschicht zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt. Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen.

Sowohl bei Clamp-On-Systemen, als auch bei Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert. Die US 4,103,551 und die US 4,610,167 zeigen Ultraschall-Durchflussmessgeräte mit Reflexionen an dafür im Messrohr vorgesehenen Reflexionsflächen. Nun sind auch Mehrpfad-Systeme bekannt geworden, welche mehrere Ultraschallwandlerpaare aufweist, welche jeweils einen Signalpfad bilden, entlang welchem die akustischen Signale durch das Messrohr verlaufen. Die jeweiligen Signalpfade und die zugehörigen Ultraschallwandler liegen dabei in zueinander parallelen und zur Messrohrachse parallelen Ebenen. Die US 4,024,760 oder die US 7,706,986 zeigen beispielhaft solch Mehrpfad-Systeme. Ein Vorteil von Mehrpfad-Systemen ist, dass sie das Profil der Strömung des Messmediums im Messrohr an mehreren Stellen vermessen und dadurch hochgenaue Messwerte für den Durchfluss bereitstellen können. Erreicht wird dies unter anderem auch dadurch, dass die einzelnen Laufzeiten entlang der unterschiedlichen Signalpfade verschieden gewichtet werden. Nachteilig bei Mehrpfad-Systemen sind jedoch ihre Herstellungskosten, da mehrere Ultraschallwandler und gegebenenfalls eine aufwendige Auswerteelektronik verbaut sind.

Zur Gewichtung der Signalpfade gibt es verschiedene Arbeiten. Der Aufsatz "Comparsion of integration methods for multipath accoustic discharge measurements" von T. Tresch, T. Staubli und P. Gruber in der Begleitschrift zur 6th international Conference on Innovation in Hydraulic Efficiency Measurements, 30 Juli -1. August 2006 in Portland, Oregon, USA, vergleicht gängige Methoden zur Gewichtung der Laufzeiten entlang unterschiedlicher Signalpfade zur Berechnung des Durchflusses.

Die EP 0 715 155 A1 weist eine Messanordnung mit einer Mehrfachbrechung auf, wobei die Teilabschnitte des Signalpfades lediglich eine Ebene bilden, die parallel zur Messrohrachse verläuft. Die Reflexionsflächen an welcher ein erster Teilabschnitt des Signalpfades endet und sich ein zweiter Teilabschnitt des Signalpfades anschließt sind in der EP 0 715 155 A1 als ebene Formkörper dargestellt, die an der Innenseite des Rohres angebracht sind. Es ist zwar theoretisch möglich, Reflexionsflächen von den Endseiten eines Messrohres einzubringen und anschließend an der Innenwandung des Messrohres festzuschweißen, allerdings stößt eine derartige Herstellung bei kleineren Messrohren mit geringen Nennweiten schnell an seine Grenzen, da ein Schweißgerät bei kleinen Nennweiten mit großem Aufwand und unter Verlust von Präzision bei der Positionierung der Reflexionsformkörper eingesetzt werden kann. Somit ist die Lehre der EP 0 715 155 A1 auf Messrohre mit großen Nennweiten anwendbar.

Die DE 10 2008 055 030 A1 beschreibt einen durch Hydroforming ausgebildeten Anschlussstutzen in einem Ultraschalldurchflussmessgerät. In diesen Anschlussstutzen wird ein Ultraschallwandler eingesetzt. Die Signalübertragung erfolgt entlang eines geraden Signalpfades ohne dass das Signal an der Rohrwandung reflektiert wird. Das Messrohr des Durchflussmessgerätes weist dabei eine flache Form auf, so dass - anders als bei runden Querschnitten - bei diesem Messrohr weniger Störungen im Strömungsprofil durch Verwirbelungen auftreten können.

Die DE 102 49 542 A1 beschreibt eine Koppelfläche zur Einkopplung eines Ultraschallsignals von einem Ultraschallwandler in ein Messrohr, wobei die Koppelfläche schräg aus dem Messrohr herausgeformt ist. Das Messrohr weist zudem einen Formkörper 10 auf, welcher eine Reflexionsfläche bereitstellt.

Die EP 0 303 255 A1 stellt beschreibt ein Messrohr eines Ultraschalldurchflussmessgerätes, in welchem eine Reflexionsfläche integral mit dem Messrohr ausgebildet ist. Dabei kommt es über einen weiten Bereich zu einer Durchschnittsaufweitung des Messrohres, was ungünstig für die genaue Ermittlung der Messdaten ist.

DE 44 37 588 A1 beschreibt ein Messrohr für ein Ultraschall-Durchflussmessgerät, wobei das Messrohr ein Gussteil ist, bei dem die Innenkonturen nachbearbeitet sind.

Die DE 10 2012 013 916 A1 - sowie Fig. 6 und 7 der vorliegenden Anmeldung - zeigt demgegenüber ein Messrohr eines Ultraschalldurchflussmessgerätes mit eingeschraubten Reflexionsflächen. Dabei wird zunächst ein Anschlussstutzen mit einem Gewinde ausgeformt in welchen anschließend ein Reflektor eingesetzt werden kann. Diese Herstellungsvariante hat sich für alle Messrohre, unabhängig von ihrer Nennweite, grundsätzlich bewährt. Die Herstellung erfordert allerdings die genaue Einhaltung von vorgegebenen Bohrmustem und jeder Anschlussstutzen muss vor dem Einsetzen des Reflektors gesondert bearbeitet werden.

Eine Alternative bereits bekannte Variante ist das Gießen des Rohres und das Anschweißen von Stutzen am Messrohr und das anschließende Verschrauben oder Anschweißen einer Reflexionsfläche.

Die Aufgabe der Erfindung besteht darin, ein Ultraschall-Durchflussmessgerät mit mehreren Reflexionsflächen im Messrohr bereitzustellen, wobei das Messrohr mit verringerter Herstellzeit gefertigt werden kann.

Die Aufgabe wird durch den Gegenstand des unabhängigen Anspruchs 1 gelöst.

Ein entsprechendes Messrohr eines Ultraschall-Durchflussmessgeräts weist eine Messrohrwandung, zumindest bereichsweise einer Grundform mit rotationssymmetrischem oder polygonalem Querschnitt und mit einer geraden Messrohrachse auf,
wobei das Messrohr wird zunächst einem sogenannten Hydroforming bzw. Innenhochdruckumformverfahren unterzogen wird. Dabei wird eine Außenkontur bereitgestellt, an welche die Messrohrwandung angepresst wird. Dadurch erfolgt eine Konturierung des Messrohres sowohl bezüglich der Innen- als auch der Außenwandung des Messrohres.

Für das Innenhochdruckverfahren eignen sich alle zugfesten verformbaren Materialien, also im gewissen Umfang auch gegossene Messrohre, wie sie überwiegend bei der Konstruktion von Ultraschall-Durchflussmessgeräten eingesetzt werden. Als weitaus idealeres Material für den Umformprozess hat sich allerdings ein Messrohr aus Metallblech erwiesen.

Das Messrohr kann in einzelne Messrohrabschnitte bzw. Teilbereiche unterteilt sein, welche miteinander verschweißt oder miteinander integral nahtstellenfrei, also ohne Schweißnähte, verbunden sind. Letzteres ist bevorzugt, da die nahtlosen Übergänge der Messrohrabschnitte bzw. Teilbereiche besonders kostengünstig und zeitsparend herstellbar sind. Darüber hinaus kann ein zusätzlicher Fertigungsschritt und ein zusätzliches Bauteil eingespart werden. Die Grundform kann lediglich abschnittsweise, insbesondere über lediglich einen Messrohrabschnitt bzw. einen ersten Teilbereich des Messrohres, ausgebildet sein oder sich über den gesamten Messrohrverlauf erstrecken. Bekannte Grundformen mit rotationssymmetrischem oder polygonalem Querschnitt im Bereich des Rohrbaus sind beispielsweise Zylinderformen oder oftmals in Gasleitung eingesetzt Rohrleitungen mit quaderförmiger Mantelfläche. Selbstverständlich sind auch andere eher unübliche Rohrgeometrien, wie z.B. Rohre mit prismaförmigen Mantelflächen vom Gegenstand der Erfindung erfasst.

Das Ultraschall-Durchflussmessgerät weist darüber hinaus einen Sender zum Senden eines akustischen Signals auf einen ersten Signalpfad und einen Empfänger zum Empfangen des akustischen Signals auf dem ersten Signalpfad auf. Die Begriffe Sender und Empfänger sind im Rahmen der vorliegenden Erfindung derart zu verstehen, dass der Sender und der Empfänger durch ein- und denselben Ultraschallwandler gestellt werden können. Der entsprechende Ultraschallwandler weist in diesem Fall einen Betriebsmodus für den Sendebetrieb auf und fungiert in diesem Betriebsmodus als Sender. Er weist zudem einen Betriebsmodus für den Empfangsmodus auf und fungiert in diesem Betriebsmodus als Empfänger. Nach dem Aussenden eines Ultraschallsignals kann der Ultraschallwandler vom Sende- in den Empfangsmodus umschalten, während das Ultraschallsignal einen Signalpfad im Messrohr durchläuft. Das Ultraschallsignal kann beim Durchlauf auf senkrecht auf eine Reflexionsfläche geführt werden und auf dem bereits durchlaufenen Signalpfad bis zum Ultraschallwandler rückgeführt werden. Wenn das Ultraschallsignal auf den Ultraschallwandler rückgeführt wird, befindet sich dieser im Empfangsmodus und stellt einen Empfänger dar. Insofern wird der Sender und der Empfänger durch zwei Schaltungsanordnungen (eine Schaltung für den Sendemodus und eine Schaltung für den Empfangsmodus) in ein und demselben Ultraschallwandler realisiert. Wesentlich häufiger und vorrangig durch den Gegenstand der Erfindung erfasst ist jedoch eine Anordnung aus zumindest zwei Ultraschallwandlern als Sender und Empfänger, welche jeweils zwischen dem Sende- und Empfangsbetriebsmodus umschaltbar sind. Die Messung zur Ermittlung der Durchflussgeschwindigkeit oder des Volumenstromes wird mittels der an sich bekannten Laufzeitdifferenzmethode durchgeführt.

Die Messung beruht auf einer Mehrfachreflexion des Ultraschallsignals im Messrohr. Vorzugsweise propagiert dabei das Ultraschallsignal in axialer Richtung durch das Messrohr ohne jedoch einen parallelen Verlauf zur Messrohrachse aufzuweisen. Die Mehrfachreflexion hat dabei insbesondere das Ziel Messstörungen, welche durch die Rotation der Strömung hervorgerufen werden, zu kompensieren.

Zur Realisierung der Mehrfachreflexion weist das Messrohr mehrere Reflexionsflächen auf, an welchen das akustische Signal auf dem ersten Signalpfad mehrfach reflektiert wird. Es sind zwar eine Vielzahl von Messgeräten bekannt, welche eine Einfachreflexion an der Messrohrwandung - eine sogenannte Zweitraversenanordnung realisiert, im vorliegenden Fall zielt die Anmeldung allerdings auf eine Mehrfachreflexion ab, bei der das Ultraschallsignal mehrfach hintereinander im Messrohr auf Teilsignalpfaden reflektiert wird.

Die Reflexionsflächen sind dabei integral aus der Messrohrwandung ausgeformt. Integral ausgeformt bedeutet in diesem Zusammenhang, dass die Reflexionsflächen nicht als gesondertes Bauteil an oder im Messrohr angeschweißt sind sondern durch die Messrohrwandung bereitgestellt werden. Die Messrohrwandung ist dabei im Bereich der Reflexionsflächen verformt und in diesem Bereich von seiner Grundform ab. Integral ausgeformte Reflexionsflächen sind aus der DE 198 61 073 A1 oder auch aus der US 5 090 252 A bekannt. Diese Reflexionsflächen führen allerdings zu einer Verengung oder Aufweitung des Messrohrquerschnitts und ändern damit das Strömungsprofil im erheblichen Maße. Die Reflexionsflächen in den vorgenannten Druckschriften sind zudem nur in bestimmten Richtungen ausrichtbar. Somit können nur bestimmte Signalpfade realisiert werden - jedoch nicht der beispielsweise in der DE 10 2012 013 916 A1 dargestellte Signalpfad.

Demgegenüber sind die Reflexionsflächen zur Reflexion des akustischen Signals derart ausgerichtet sind, dass mehrere der Reflexionsflächen zumindest teilweise in die Grundform des Messrohr hineinragen und mehrere der Reflexionsflächen zumindest aus der Grundform des Messrohres nach außen hervorstehen. Durch diese wesentlich variablere Ausrichtung der Reflexionsflächen sind auch kompliziertere Signalpfadverläufe realisierbar, ohne dass es zu größeren Strömungsstörungen durch Messrohrverengungen kommt.

Vorteilhafte Ausgestaltungen der Erfindung sind Gegenstand der Unteransprüche.

Es ist insbesondere von Vorteil, wenn das Messrohr zumindest einen Anschlussstutzen und/oder zumindest eine ebene Funktionsfläche aufweist, zur Anordnung und ggf. zur Festlegung des Senders und/oder Empfängers am oder im Messrohr, wobei der zumindest eine Anschlussstutzen und/oder die zumindest eine ebene Funktionsfläche integral aus der Messrohrwandung ausgeformt ist. Das Messrohr weist daher kein angeschweißtes oder angeschraubtes Bauteil auf, sondern integral ausgeformte Elemente - wie Reflexionsflächen sowie Anschlussstutzen und/oder Funktionsflächen. Funktionsflächen sind beispielsweise bei Clamp-On Durchflussmessgeräten von Vorteil, um einen möglichst luftfreien Übergang zwischen Sensor oder Empfänger und dem Messrohr zu erreichen. Ein zusätzlicher Fertigungsschritt kann vorteilhaft dabei entfallen, da sowohl die Reflexionsflächen als auch der Anschlussstutzen und/oder die Funktionsflächen durch ein- und dasselbe Umformverfahren realisierbar sind.

Es ist von Vorteil, wenn die Reflexionsflächen zur Reflexion des akustischen Signals derart ausgerichtet sind, dass mehrere der Reflexionsflächen zumindest teilweise in die Grundform des Messrohrs hineinragen und mehrere der Reflexionsflächen zumindest aus der Grundform des Messrohres nach außen hervorstehen. Durch diese Anordnung lassen sich optimierte Signalpfadverläufe sehr einfach realisieren.

Die Reflexionsflächen in die Messrohrwandung eingeformt sind, derart, dass eine Mehrfachreflexion im Messrohr erfolgt, wobei der Signalpfad an zumindest drei in axialer Richtung hintereinander angeordneten Reflexionsflächen reflektiert wird. Durch die hintereinander angeordneten Reflexionsflächen kann eine Änderung des Strömungsprofils, weiche sich über den vom Signalpfad definierten Messbereich entwickelt zumindest teilweise erfasst und kompensiert werden.

In einer besonders unkomplizierten Variante können die Reflexionsflächen eben ausgebildet sein.

Bei schnellen Strömungen kann das Ultraschallsignal vom idealen Auftreffpunkt auf der jeweiligen Reflexionsfläche abweichen. Diese Abweichung setzt sich an der darauffolgenden Reflexionsfläche fort und kann im schlimmsten Fall bei Mehrfachreflexionen zu einem Signalverlust führen. Dieser Fehler ist im Rahmen der vorliegenden Erfindung als Verwehung definiert. Um diese Verwehungen zu vermeiden ist es von Vorteil, wenn die Reflexionsfläche oder die Reflexionsflächen konvex mit einer Reflexionsflächenkrümmung ausgebildet sind. Zwar ist die Rohrwandung eines zylindrischen Rohres selbst auch konvex ausgebildet, allerdings unterscheidet sich die Kontur der Reflexionsflächenkrümmung bei der vorliegenden Reflexionsfläche von einer Krümmung der Messrohrwandung. Dieser Unterschied kann sich insbesondere in der unterschiedlich Kreisbogenlänge bei gleichbleibenden Kreiswinkel ergeben oder durch einen Mittelpunktswinkel ergeben, welcher einen Scheitelpunkt aufweist, welcher nicht auf der Messrohrachse liegt.

Die zumindest eine ebene Funktionsfläche ist vorteilhaft durch ein Innenhochdruck-Umformverfahren aus dem Messrohr ausgeformt. Das Innenhochdruck-Umformverfahren ist auch als Hydroforming bekannt. Dabei wird durch einen Innendruck eine Außenkontur verformt. Weiche abgerundete Übergänge zwischen den Messrohrelementen ist ein wesentliches Merkmal dieser Technik. Da der Innenrohrraum des Messrohres dadurch keine strömungsbehindernden scharfen Kanten aufweist, ist diese Technik besonders bevorzugt. Zudem ist die Produktionszeit eines Messrohres bei dieser Umformtechnik besonders gering.

Der Anschlussstutzen kann aus der ebenen Funktionsfläche mittels eines Fließbohr-Prozesses ausgeformt werden. Dadurch wird der Anschlussstutzen durch Materialverdrängung integral aus der Messrohrwandung ausgeformt. Ein gesondertes Bauteil für den Anschlussstutzen muss daher nicht hergestellt und in einem gesonderten Fertigungsschritt verschweißt werden, was eine Arbeitszeit und Kostenreduzierung bedeutet. Besonders bevorzugt kann ein Gewinde in diesen Anschlussstutzen eingeformt werden.

Es ist von Vorteil, wenn das Messrohr einen oder mehrere weitere Messrohrabschnitte bzw. Teilbereiche des Messrohres aufweist, welche einen größeren Messrohrquerschnitt aufweisen als der erste Teilbereich des Messrohres, wobei die Vergrößerung dieser Messrohrabschnitte durch ein Innenhochdruck-Umformverfahren des Messrohres erfolgt. Durch ersten Teilbereich mit geringerem Messrohrquerschnitt wird eine Erhöhung des Messeffektes erzielt. Dies erfolgt durch eine Erhöhung der Durchflussgeschwindigkeit und dadurch ein größeres Δt bei der Messung nach der Laufzeitdifferenzmethode.

Das Messrohr kann vorteilhaft aus Metallblech, besonders bevorzugt, da stabil und verformbar, mit einer Wandstärke zwischen 1-5 mm, bestehen. Dieses wesentlich besser verformbar als die wesentlich-häufiger verwendeten Gussrohre. Zudem treten bei der Verformung von Metallblech kaum Risse oder Materialschwächungen auf. Es wird daher oft auch als zugstabil bezeichnet.

Die Reflexionsflächen sind insbesondere derart in das Messrohr eingeformt sind, dass eine Ablenkung des Signalpfades derart erfolgt, dass zumindest drei aufeinanderfolgende Teilpfade des Signalpfades jeweils keinen Schnittpunkt mit der Messrohrachse aufweisen. Durch diese Anordnung wird das Strömungsprofil auf verschiedenen Ebenen erfasst. Symmetrische und asymmetrische Verwirbelungen im Strömungsprofil können besser ausgemittelt werden.

Es ist insbesondere von Vorteil, wenn sich der erste Signalpfad (8) aus geraden Teilabschnitten zusammensetzt, wobei
a) jeweils die minimalen Abstände von mindestens drei Teilabschnitten einen Abstand von 0,4-0,6 r zur Messrohrachse aufweisen, wobei r der Innenradius des Messrohres ist;
b) wobei ein erster Teilabschnitt, welcher eine erste achsparallele Ebene definiert, einen unmittelbar korrespondierenden zweiten Teilabschnitt aufweist, welcher eine zweite achsparallele Ebene definiert, beide Ebenen durch eine erste Reflexionsfläche verlaufen und die Normalvektoren einen Winkel von weniger als 10° einschließen,
c) wobei ein dritter Teilabschnitt, welcher eine dritte achsparallele Ebene definiert, einen unmittelbar korrespondierenden vierten Teilabschnitt aufweist, welcher eine vierte achsparallele Ebene definiert,
wobei beide Ebenen durch eine zweite Reflexionsfläche verlaufen und die Normalvektoren einen Winkel von weniger als 10° einschließen.

Dabei kann der Verlauf des Signalpfades in axialer Draufsicht ein Vieleck beschreiben, dessen Seitenschnittpunkte innerhalb, auf oder außerhalb des Messrohres liegen. Durch diesen Signalpfadverlauf wird es dem Messgerät insbesondere ermöglicht einen Rotationsausgleich von rotierenden Strömungen bei der Messung zu berücksichtigen und zu kompensieren.

Es ist insbesondere von Vorteil, wenn die dritte und ein vierte Reflexionsfläche auf oder im Messrohr parallel zur Messrohrachse hintereinander angeordnet sind
Und eine fünfte Reflexionsfläche und
entweder
i der Sender oder
ii der Empfänger oder
iii eine sechste Reflexionsfläche
auf oder im Messrohr parallel zur Messrohrachse hintereinander angeordnet sind, wobei sich der Signalpfad aus sechs oder weniger geraden Teilpfaden zusammensetzt.

Bevorzugte Ausführungsbeispiele der Erfindung werden anhand der nachfolgenden Zeichnungen näher erläutert. Sie zeigen:
- Fig. 1: axiale Draufsicht auf ein Ultraschall-Durchflussmessgerät mit einem mit dem erfindungsgemäßen Verfahren hergestellten Messrohr;
- Fig. 2: geschnittene Perspektivansicht des Ultraschall-Durchflussmessgerätes;
- Fig.3: Perspektivansicht mit geschnittenem Teilbereich des Ultraschall-Durchflussmessgerätes;
- Fig.4: Seitenansicht des Grundkörpers des Ultraschall-Durchflussmessers;
- Fig.5: Seitenansicht eines zweiten Ultraschall-Durchflussmessers mit geschnittenem Teilbereich;
- Fig.6: teiltransparente Perspektivansicht eines Ultraschalldurchflussmessgerätes aus dem Stand der Technik;
- Fig.7: Ansicht der Positionierung eines Reflektors in der Wandung des Messrohres des Ultraschalldurchflussmessgerätes der Fig. 6; und
- Fig.8: Teilausschnitt des Messrohres der Fig.1-5 mit einem im Messrohr integrierten Anschlussstutzen zur Aufnahme des Senders und/oder Empfängers.

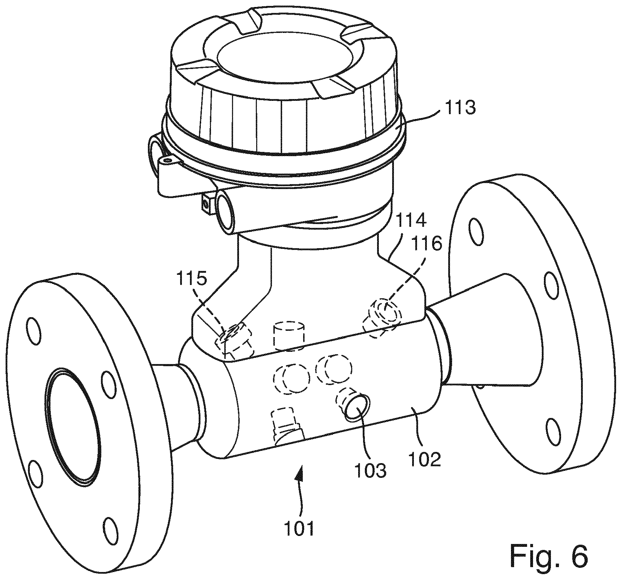

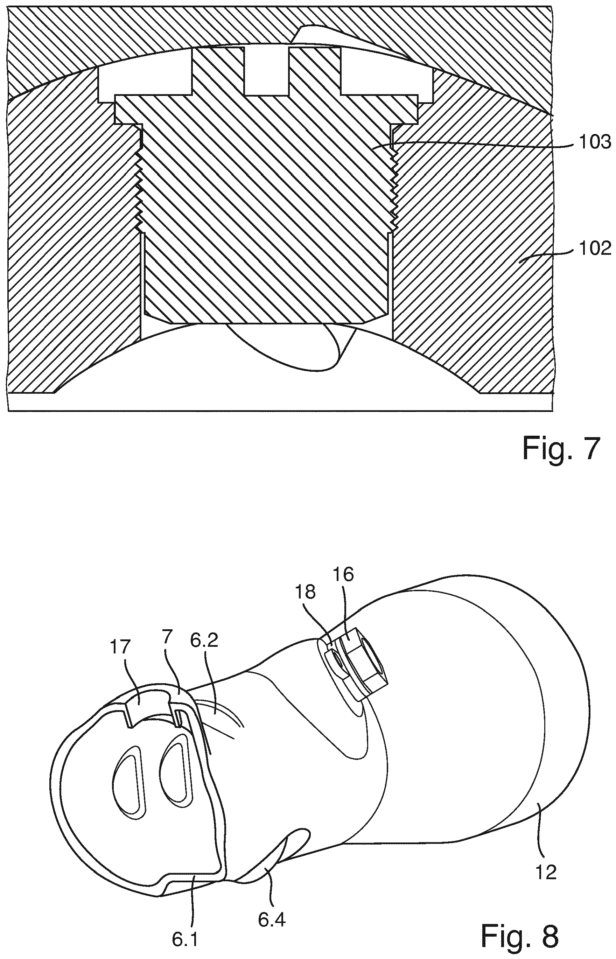

Fig. 6 zeigt einen Aufbau eines Ultraschall-Durchflussmessgerätes 101, wie es bereits aus der DE 10 2012 013 916 A1 bekannt ist, auf welche im Rahmen der vorliegenden Erfindung vollumfänglich Bezug genommen wird. Wie man aus Fig. 6 erkennt sind Reflektoren 103 in einem Messrohr 102 des diesem Ultraschall-Durchflussmessgerät 101 festgelegt. Dies erfolgt durch Einschrauben der Reflektoren 103 in dazu vorgesehene Anschlüsse. Diese eingeschraubten Reflektoren 103 sind in Fig. 7 nochmals im Detail dargestellt In der Transparentdarstellung der Fig. 6 sind zudem zwei Ultraschallwandler dargestellt, welche als Sender 115 und als Empfänger 116 ausgebildet sind, dargestellt. Die Auswertung der Messsignale und die Weitergabe erfolgt in einem Transmitter 113, welcher im vorliegenden Beispiel über ein Anschlussstück 114 am Messrohr festgelegt ist.

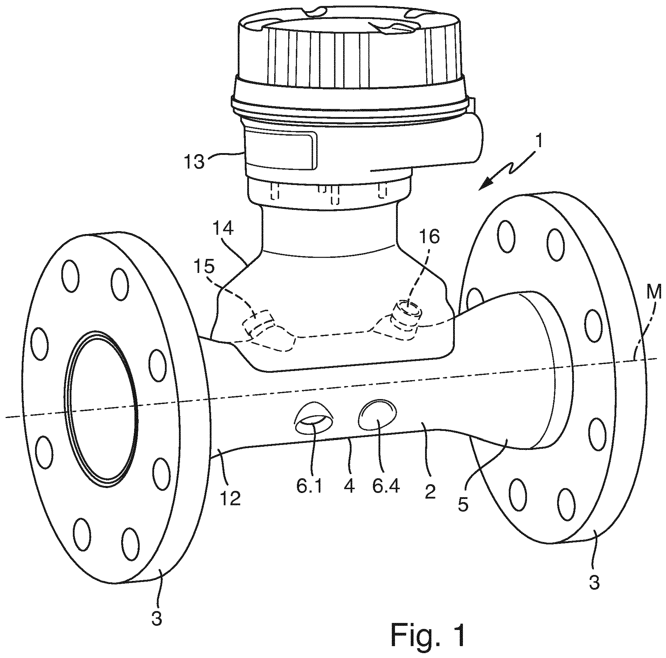

Diese Anordnung aus Sender, Empfänger, Transmitter 13 und Anschlussstück 14 sind baugleich auf die nachfolgenden Fig. 1-5 anwendbar.

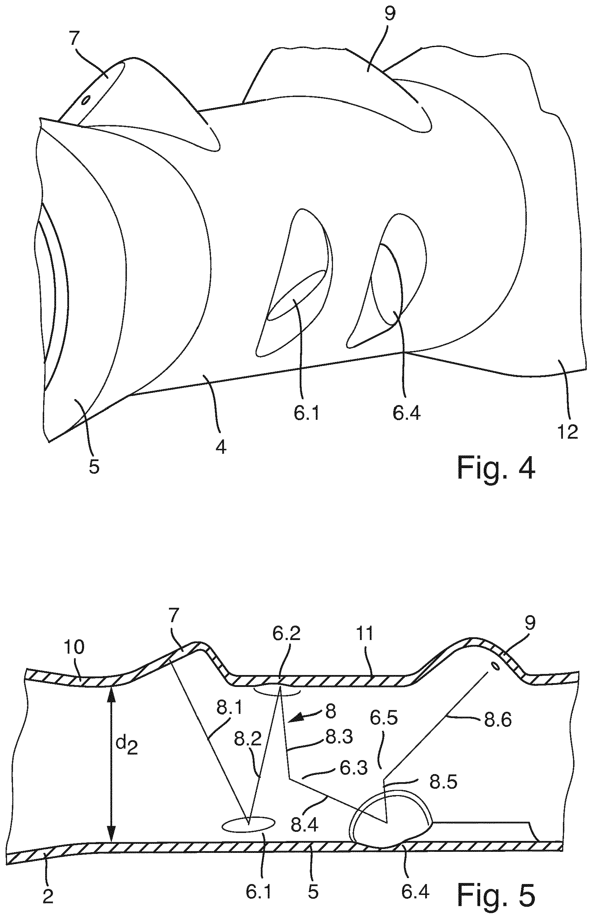

Fig. 1-5 zeigt einen Aufbau eines mit dem erfindungsgemäßen Verfahren hergestellten Messrohres (2) eines Ultraschall-Durchflussmessgerätes 1 und - insbesondere Fig. 5 - einen bevorzugten Signalpfadverlauf mit einem Signalpfad 8, welcher im Wesentlichen dem Signalpfadverlauf der Fig. 6 entspricht.

Der Signalpfad 8 setzt sich im vorliegenden Fall aus sechs geraden Teilabschnitten 8.1 bis 8.6 zusammen. Das Messrohr 2 kann über Flansche 3 endständig an jeweils ein Rohrsegment einer Rohrleitung angeschlossen werden.

Das Messrohr weist im Bereich der Flansche 3 einen zweiten und einen dritten Messrohrabschnitt bzw. Teilabschnitt 5 und 12 mit einem Messrohrinnendurchmesser d₁ auf, welcher sich zur Mitte des Messrohres hin zu einem ersten Messrohrabschnitt bzw. Teilabschnitt 4 mit einem Innendurchmesser d₂ verkleinert.

Entlang dieses ersten Teilbereichs 4 sind im konkreten Ausführungsbeispiel der Fig. 1-5 zwei Funktionsflächen 7 und 9 angeordnet im Messrohr 2 angeordnet. An diesen Funktionsflächen kann entweder ein Clamp-On Sensor angeschlossen werden, welcher das Ultraschallsignal durch eine Messrohrwandung 11 direkt in das Messrohr 2 einleitet. Alternativ können aus den Funktionsflächen 7 und 9 auch Anschlussstutzen integral in die Messrohrwandung ausgeformt werden. Dies kann besonders bevorzugt durch ein Flow-Drilling Verfahren erfolgen.

Weiterhin sind zur Signalpfadführung im Messrohr fünf Reflexionsflächen 6.1 bis 6.5 in das Messrohr eingeformt bzw. aus der Messrohrwandung ausgeformt. Der Begriff "ausgeformt" umfasst im Zusammenhang mit der vorliegenden Erfindung ein Eindrücken der Reflexionsflächen in die Rohrwandung nach innen als auch ein Herausdrücken der Reflexionsflächen aus der Rohrwandung nach außen. Beim Eindrücken der Reflexionsflächen in die Messrohrwandung ist die Reflexionsfläche derart gegenüber der restlichen Messrohrwandung angeordnet, dass sie in das Messrohr geringfügig hineinragt. Ein Herausdrücken aus der Messrohrwandung erfolgt derart, dass die Reflexionsflächen aus dem restlichen Außenumfang Messrohrabschnittes nach außen hervorsteht.

In einer Ausführungsvariante steht eine oder mehrere Reflexionsflächen aus dem Außenumfang zumindest teilweise hervor. Während eine oder mehrere weitere oder insbesondere auch dieselbe Reflexionsfläche in das Messrohr hineinragt. Durch diese Anordnung der Reflexionsfläche wird eine wesentlich individuellere Ausrichtung jeder einzelnen Reflexionsfläche erreicht, wodurch auch kompliziertere Signalpfadverläufe realisierbar sind.

Alternativ können auch anstelle des Empfängers ein weiterer sechster Reflektor angeordnet sein, welcher ein Rückführen des Signals entlang des zweiten Signalpfades ermöglicht. In diesem Fall stellt ein Ultraschallwandler je nach Betriebsmodus sowohl den Sender als auch den Empfänger dar.

Alternativ dazu können aber auch die Ultraschallwandler lediglich am Messrohr, als sogenannte Clamp-On Unltraschallwandler, angeordnet sein und vorzugsweise über jeweils eine Funktionsfläche - wie sie in der DE 102 49 542 A1 dargestellt ist - an das Messrohr angekoppelt werden.

Bei der Ausgestaltung der Reflexionsflächen 6.1 bis 6.5 sind vorzugsweise Flächen mit einer konkaven Oberflächen von Vorteil, da diese eine Verwehung des Ultraschallsignals bei größeren Durchflussgeschwindigkeiten entgegenwirken. Freilich weist jedes Rundrohr eine konkave Fläche auf, diese ist allerdings per se durch die Rohrform vorgegeben und nicht speziell in das Messrohr eingeformt ist. Durch das Einformen hebt sich daher die Kontur der Reflexionsfläche von der Kontur der Messrohrwandung ab.

Durch den Übergang 10 vom zweiten Teilbereich 5 mit größerem Durchmesser d₁ in den ersten Teilbereich 4 mit kleinerem Durchmesser d₂ wird eine Strömungsprofilabflachung erreicht. Der Anstellwinkel α des Übergangs 10, gegenüber einer geraden Rohrwand beträgt vorzugsweise weniger als 15°, vorzugsweise weniger als 10°, insbesondere 6-8°. Dies ist beispielsweise von Vorteil, wenn das zu messende Medium zuvor eine Störung, beispielsweise eine Krümmung passiert hat. In diesem Fall wirkt aufgrund der Trägheit des Mediums eine größere Masse des Mediums auf einen Wandbereich des Messrohres 2 stärker ein als auf den diesem Wandbereich gegenüberliegenden Teil. Für einen Ausgleich wird üblicherweise ein Strömungsgleichrichter verwendet. Durch das Messgerät kann allerdings bereits eine Strömungsprofilabflachung erfolgen, ohne dass ein vorgeschalteter Strömungsgleichrichter notwendig wäre. Dies führt zu einem breiteren Einsatzspektrum und zu einem geringeren Platzbedarf bei Verwendung Ultraschall-Durchflussmessgeräten in Rohrleitungen. Entsprechende Störungen können neben Krümmungen auch Ablagerungen oder andere Objekte in der Rohrleitung, z.B. an Entnahmestellen sein, welche auf gleiche Art und Weise ohne zusätzliche Bauteile ausgeglichen werden können. Die grundsätzliche Charakteristik der Strömung bleibt dabei erhalten

Zusätzlich zu dem Auftreten von ungleichmäßiger Masseverteilung des Mediums Störungen treten auch häufig Verwirbelungen und Rotationsbewegungen auf.

Diese werden durch eine Doppelreflexion von zumindest zwei geraden Teilabschnitten 8.1 und 8.4 des Signalpfades kompensiert. Der konkrete Signalverlauf des Ausführungsbeispiels der Fig. 1-3 wird im Folgenden näher beschrieben.

Ausgehend vom Ultraschallwandler 7, dem Sender, wird ein Ultraschallsignal in das Messrohr ausgesandt. Der Signalverlauf durch das Messrohr zwischen dem Ultraschallwandler 7, sofern dieser als Sender fungiert, und dem Ultraschallwandler 9, sofern dieser als Empfänger fungiert, kennzeichnet einen ersten Signalpfad.

Ein zweiter Signalpfad beschreibt den Signalverlauf vom Ultraschallwandler 9, als Sender, zum Ultraschallwandler 7, als Empfänger und wird im Folgenden nicht näher betrachtet.

Dieses Ultraschallsignal legt einen ersten Teilabschnitt 8.1 auf dem ersten Signalpfad 8 zurück, wird an der Reflexionsfläche 6.1 reflektiert und legt einen zweiten Teilabschnitt 8.2 auf dem ersten Signalpfad 8 zurück.

Der erste Teilabschnitt weist dabei einen Abstand von 0,4-0,6 r zur Messrohrachse auf, wobei r der Innenradius des Messrohres ist. Im Fall des in Fig. 1 dargestellten optimalen Falles, in welchem der Verlauf des Signalpfades ein gleichseitiges Dreieck beschreibt, welches seine Eckpunkte auf den Reflexionsflächen hat, beträgt der Abstand zur Messrohrachse 0,5 r.

Der Abstand kann allerdings auch größer oder kleiner sein, so dass das Dreieck bzw. dessen Eckpunkte innerhalb oder außerhalb des Messrohres liegen.

Der erste und der zweite Teilabschnitt 8.1 und 8.2 liegen idealerweise auf ein und derselben achsparallelen Ebene, wie dies ebenfalls in Fig. 1 dargestellt ist.

In einem weniger idealen Fall spannt der erste Teilabschnitt 8.1 eine erste achsparallele Ebene auf. Der zum ersten Teilabschnitt unmittelbar korrespondierende zweite Teilabschnitt, spannt eine zweite achsparallele Ebene auf.

Dabei setzt sich der Signalpfad in axialer Richtung fort. Beide Ebenen verlaufen durch die erste Reflexionsfläche 6.1. Ausgehend von der Reflexionsfläche öffnen sich die Ebenen unter einem nur geringen Winkel von weniger als 10°, so dass die Ebenen bis auf diese geringe Abweichung nahezu parallel zueinander verlaufen.

Der Strahlenverlauf der Teilabschnitte 8.1 und 8.2 beschreibt somit eine Rückreflexion des Teilabschnittes 8.1 in einer nahezu gleichen Ebene wodurch eine rotierende Strömung in einer ersten Rotationsrichtung messtechnisch erfasst und/oder kompensiert werden kann.

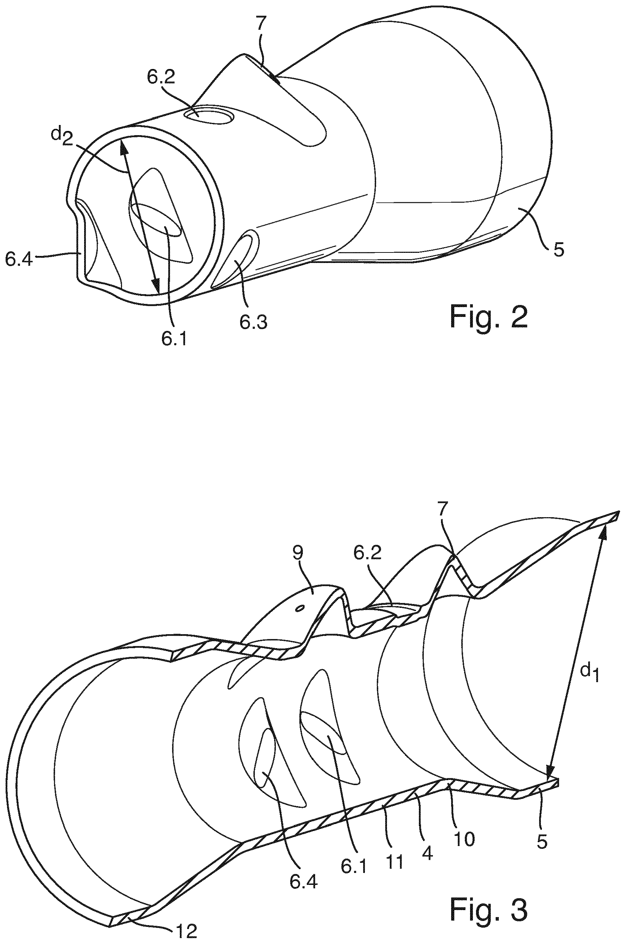

Ein dritter Teilabschnitt 8.4 wird in Fig. 2 auf dem ersten Signalpfad 8 zwischen den Reflektoren 6.3 und 6.4 zurückgelegt. Dieser wird an der Reflexionsfläche 6.4 reflektiert und legt einen vierten Teilabschnitt 8.4 auf dem ersten Signalpfad 8 bis zum Reflektor 6.5 zurück.

Der dritte Teilabschnitt weist ebenfalls einen Abstand von 0,4-0,6 r zur Messrohrachse auf, wobei r der Innenradius des Messrohres ist und der Abstand im vorliegenden Fall 0,5 r beträgt. Der Abstand kann allerdings auch größer oder kleiner sein, so dass das Dreieck bzw. dessen Eckpunkte innerhalb oder außerhalb des Messrohres liegen.

Auch im Vorliegenden Fall erfolgt eine Rückreflexion, wie sie bereits beim ersten Teilabschnitt 8.1 beschrieben wurde.

Der Strahlenverlauf der Teilabschnitte 8.4 und 8.5 beschreibt somit eine Rückreflexion des Teilabschnittes 8.4 in einer nahezu gleichen Ebene wodurch eine rotierende Strömung in einer zweiten Rotationsrichtung messtechnisch erfasst und/oder kompensiert werden kann.

Diese zweite Rotationsrichtung ist vorzugsweise der ersten Rotationsrichtung entgegengesetzt, so dass eine vollständige Kompensation der Rotationsanteile der Strömung erfolgen kann.

Für eine symmetrische Erfassung der Position der Strömung und zur Erfassen von symmetrischen Verwirbelungen ist es schließlich notwendig, dass Verlauf des Signalpfades in axialer Draufsicht ein Vieleck beschreibt, dessen Seitenschnittpunkte innerhalb, auf oder außerhalb des Messrohres liegen. Es versteht sich, dass das Vieleck nicht zwingend durch aufeinanderfolgende Teilabschnitte gebildet werden muss, sondern auch zwei aufeinanderfolgende Teilabschnitte auf einem Schenkel des Vielecks verlaufen können. Dieses Vieleck ist optimalerweise ein Dreieck, kann allerdings aufgrund des Versatzes der Ebenen zueinander auch als Vieleck ausgebildet sein.

Dieser Versatz kann beispielsweise bei produktionsbedingten Abweichungen auftreten.

Ausgehend von der zuvor beschriebenen Rückreflexion erfolgt in Fig. 2 zunächst eine Rückreflexion eines vom Sender 7 ausgesandten Ultraschallsignales von dem Teilabschnittes 8.1 auf den Teilabschnitt 8.2. Anschließend passiert das ausgesandte Ultraschallsignal den Teilabschnitt 8.3. Schließlich wird das Ultraschallsignal ein zweites Mal rückreflektiert vom Teilabschnitt 8.4 auf den Teilabschnitt 8.5. Durch eine weitere Reflexion wird das Ultraschallsignal schließlich an den Empfänger 9 übertragen. Insgesamt passiert das Ultraschallsignal somit sechs Teilabschnitte, wodurch ein besonders kompakter Aufbau eines Ultraschall-Durchflussmessgerätes möglich wird. Zudem ist es möglich eine Korrektur über einen sehr weiten Strömungszahlbereich zu ermöglichen.

Durch den geschlossenen Signalpfadverlauf in Kombination mit der zweifachen Rückreflexion können auch somit rotierende Strömungen mit Verwirbelungen zuverlässig erfasst werden, wie sie beispielsweise im Anschluss an Störungen im Rohr, beispielsweise Rohrbiegungen, 90°-Krümmern usw. auftreten können. Diese Erfassung von rotierenden Strömungen ergänzt sich optimal mit der zuvor beschriebenen Strömungskompensation durch die Verengung des Innendurchmessers der Messrohrwandung innerhalb des Messrohres um Störungen bei der Messung auszugleichen.

In einem zweiten, nicht-näher dargestellten Ausführungsbeispiel eines Durchflussmessgerätes kann das Durchflussmessgerät einen asymmetrischen Aufbau aufweisen, mit einem zur Fig. 1-4 im Wesentlichen gleichen Signalverlauf, wobei ein vorderer Teil bzw. Teilbereich ein Rohrsegment mit konstantem Rohrdurchmesser d₁ ist, für eine erste Gleichrichtung der Strömung und im hinteren Teil bzw. Teilbereichs des Messrohres Ultraschallwandler und Reflexionsflächen angeordnet sind. Durch diesen kompakten Aufbau des Signalpfades können somit bereits bestehende Rohrweiten im vorderen Teilbereich als Einlaufstrecke für eine Strömungsberuhigung genutzt werden. Vom Rohrsegment, also dem vorderen Messrohrabschnitt des Messrohres ist in Strömungsrichtung ein Übergang angeordnet, welcher unter einem Winkel von 10° in einen ersten Teilbereich mit verengtem Innendurchmesser d₂ übergeht.

Die in Fig. 1-5 dargestellte Anordnung der Reflexionsflächen und der damit verbundene Signalverlauf ist grundsätzlich auch aus der DE 10 2012 013 916 A1 bekannt und stellt eine besonders vorteilhafte Variante der Signalführung eines Ultraschallsignals bei einer Mehrfachreflexion dar.

Wie aus Fig. 6 erkennbar ist, sind die Reflektoren in das Messrohr eingeschraubt. Aufgrund der unterschiedlichen Einfall- und Ausfallwinkel der Signale werden zunächst Schrägbohrungen in das Messrohr eingebracht und Gewinde in die Messrohrwandung im Bereich der Bohrung eingeschnitten. Anschließend wird der Reflektor in das Messrohr eingeschraubt. Wichtig bei der Ausgestaltung eines Messrohres mit einem Signalpfadverlauf welcher durch eine Mehrfachreflexion realisiert wird, ist die Ausrichtung der Reflexionsflächen im Messrohr. Hierfür wird bei der in Fig. 6 dargestellten Ausführungsvariante ein Bohrmuster benötigt, welches bei der Fertigung sehr genau eingehalten werden muss.

Im Unterschied dazu sind sowohl die Reflexionsflächen als auch die Anschlussstutzen des Messrohres integrale Bestandteile des Messrohres. Sie wurden nicht angeschweißt sondern aus dem Material des Messrohres ausgeformt.

Anschlussstellen, wie z.B. Schweißnähte oder Schraubverbindungen zwischen dem Messrohr und dem Anschlussstutzen und zwischen dem Messrohr und den Reflexionsflächen sind nicht vorhanden. Folglich treten an diesen Stellen keine Undichtigkeiten auf und der Anschlussstutzen ist kostengünstig herstellbar.

Der in Fig. 1-5 beschriebene erste Messrohrabschnitt weist im Wesentlichen über seinen gesamten Verlauf diesen konstanten Innendurchmesser d₂ auf. Lediglich im Bereich der Reflexionsflächen kommt es fertigungsbedingt zu geringfügigen Abweichungen vom konstanten Innendurchmesser d₂.

Die Grundform des Messrohrabschnittes ist in Fig. 1-5 zylindrisch ausgebildet, sie kann allerdings auch eine andere Form aufweisen. So sind beispielsweise auch quadratische Rohrformen oder dergl. bekannt. Die Grundform erstreckt sich im Wesentlichen über den gesamten Verlauf des Messrohrabschnittes. Der Messrohrabschnitt weist insbesondere über seinen gesamten Verlauf einen im Wesentlichen konstanten Messrohrquerschnitt auf.

Im Wesentlichen bedeutet in diesem Zusammenhang, dass die Messrohrwandung im Bereich der Reflexionsflächen von dieser Grundform abweicht, da die Reflexionsflächen durch einen Umformprozess integral aus der Grundform des Messrohrabschnittes herausgeformt bzw. in die Grundform des Messrohrabschnittes eingeformt sind. Die Kontur der Messrohrwandung weicht somit im Bereich der Reflexionsflächen von seiner Grundform abweicht.

Das Einformen der Reflexionsflächen erfolgt erfindungsgemäß anhand eines Innenhochdruckumformverfahrens.

Die in Fig. 1-5 dargestellten zweiten und/oder dritten Messrohrabschnitte sind trichterförmig ausgebildet mit einem sich zu den Endabschnitten des Messrohres vergrößernden Querschnitt. Der zweite und/oder dritte Messrohrabschnitt mit dem vorbeschriebenen trichterförmigen Verlauf ist in Fig. 1-5 gemeinsam mit dem ersten Messrohrabschnitt integral aus der Messrohrwandung ausgeformt. Hierfür ist besonders bevorzugt ein Innenhochdruck-Umformverfahren geeignet. Somit kann das in Fig. 1-5 dargestellte Messrohr in ein- und demselben Umformverfahren hergestellt werden. Anschließend können die Anschlussstutzen durch ein weiteres Umformverfahren aus den Funktionsflächen, insbesondere durch ein Fließbohr-Verfahren, hergestellt werden.

Das erfindungsgemäße Herstellverfahren des in Fig. 1-5 dargestellten Messrohres soll nachfolgend näher erläutert werden. Das Messrohr wird zunächst einem sogenannten Hydroforming bzw. Innenhochdruckumformverfahren unterzogen. Dabei wird eine Außenkontur bereitgestellt, an welche die Messrohrwandung angepresst wird. Dadurch erfolgt eine Konturierung des Messrohres sowohl bezüglich der Innen- als auch der Außenwandung des Messrohres.

Für das Innenhochdruckverfahren eignen sich alle zugfesten verformbaren Materialien, also im gewissen Umfang auch gegossene Messrohre, wie sie überwiegend bei der Konstruktion von Ultraschall-Durchflussmessgeräten eingesetzt werden. Als weitaus idealeres Material für den Umformprozess hat sich allerdings ein Messrohr aus Metallblech erwiesen.

Der Druck zum Ausformen des Messrohres kann nach Wandstärke variiert werden. Üblicherweise können durch ein Innenhochdruckverfahren nur Flächen aus der Grundform des Messrohres nach außen herausgedrückt werden. Das Messrohr der Fig. 1-5 zeigt allerdings auch Reflexionsflächen, welche teilweise in das Messrohr scheinbar eingedrückt sind. Dies kann dadurch erreicht werden, indem man ein Messrohr mit einer geringfügig kleineren Nennweite als die Zielnennweite des Messrohres verwendet. Die Zielnennweite kann beispielsweise eine Nennweite DN-30 sein. Diese Nennweite weist das Messrohr, abgesehen von den Bereichen der Reflexionsflächen, nach seiner Umformung auf. Die Nennweite des Messrohres vor seiner Umformung kann demgegenüber lediglich DN-28 betragen. Bei Anlegen des Druckes wird die Nennweite des Messrohres von DN-28 auf die Nominalnennweite DN-30 vergrößert. Dadurch können Reflexionsflächen nicht nur teilweise aus der Messrohrwandung nach außen hervorstehen sondern auch teilweise von der Messrohrwandung in das Messrohr hineinragen. Dies betrifft insbesondere den ersten Messrohrabschnitt der Fig. 1-5 welcher eine zylindrische Grundform aufweist und davon abweichend die Reflexionsflächen integral in der Messrohrwandung ausgeformt sind.

Durch das vorgenannte Verfahren wird gegenüber einem reinen Pressverfahren eine individuellere Ausrichtung der Reflexionsflächen ermöglich ohne eine zu starke produktionsbedingte Verringerung des Messrohrquerschnitts.

Im Anschluss an das vorgenannte Verfahren zur Ausfomung und Definierung der Reflexionsflächen am Messrohr kann ein Anschlussstutzen in das Messrohr eingeformt werden. Dies erfolgt besonders bevorzugt durch ein sogenanntes Fließbohr Verfahren. Dabei wird ein Fließbohrer auf die ebene Funktionsfläche aufgesetzt und durch Aufwendung von Axialkräften und unter hoher Drehzahl wird das metallische Material der Funktionsfläche partiell aufgeschmolzen und bei Temperaturen von vorzugsweise 600-800°C nach außen verdrängt. Der verdrängte Materialüberstand bildet den Anschlussstutzen. In diesen Anschlussstutzen wird mittels eines Gewindeformers ein Gewinde eingeformt. Es kann auch ein Gewindeschneider genutzt werden, allerdings empfiehlt sich ein Gewindeformer um Grate zu vermeiden und darüber hinaus keine Materialschwächung des Anschlussstutzens durch Materialabtrag zu riskieren. Der entstandene Anschlussstutzen weist eine geschlossene Werkzeugkontur ohne Freispanflächen auf. Anders als bei geschnittenen Gewinden weist der Anschlussstutzen aufgrund der Materialverdichtung im Gefüge auch eine höhere Gewinde-Materialfestigkeit auf, was bei Hochdruck-Ultraschallanwendungen besonders von Vorteil ist.

Fig 8 zeigt zwei derartige integral ausgeformte Anschlussstutzen 17, wobei ein Sender 15 oder ein Empfänger 16 innerhalb eines der beiden Anschlussstutzen angeordnet ist. Dieser Anschlussstutzen 17 weist einen nahtlosen Materialübergang zwischen der parallel zur Messrohrachse M verlaufenden Messrohrwandung 11 auf und der senkrecht zur Messrohrwandung verlaufenden Messrohrwandung 11 welche den Anschlussstutzen 17 ausbildet. Dieser Anschlussstutzen wurde aus einer der Funktionsflächen 7 oder 9 des Messrohres 2 ausgeformt.

Da ein Eingriff durch Bohrungen oder dergleichen die Messrohrwandung nachteilig schwächen würde, ist zwischen dem Empfänger und dem Anschlussstutzen ein scheibenförmiges Blech 18 mit einem Anschluss für ein Erdungskabel vorgesehen.

### Bezugszeichenliste

- 1, 101: Ultraschall-Durchflussmessgerät
- 2, 102: Messrohr
- 3: Flansch
- 4: erster Teilbereich
- 5: zweiter Teilbereich
- 6.1: erste Reflexionsfläche
- 6.2: fünfte Reflexionsfläche
- 6.3: dritte Reflexionsfläche
- 6.4: zweite Reflexionsfläche
- 6.5: vierte Reflexionsfläche
- 7: Funktionsfläche
- 8: Signalpfad
- 8.1: erster gerader Teilabschnitt
- 8.2: zweiter gerader Teilabschnitt
- 8.3: fünfter gerader Teilabschnitt
- 8.4: dritter gerader Teilabschnitt
- 8.5: vierter gerader Teilabschnitt
- 8.6: sechster gerader Teilabschnitt
- 9: Funktionsfläche
- 10: Übergang
- 11: Messrohrwandung
- 12: dritter Teilbereich
- 13, 113: Transmitter
- 14, 114: Anschlussstück
- 103: Reflexionsfläche
- 15, 115: Sender
- 16, 116: Empfänger
- 17: Anschlussstutzen
- 18: scheibenförmiges Blech

## Patentansprüche

1. Verfahren zum Herstellen eines Messrohrs (2) eines Ultraschall-Durchflussmessgeräts,
wobei das Messrohr eine Messrohrwandung (11), eine gerade Messrohrachse und mehrere Reflexionsflächen (6.1-6.5) aufweist, an welchen ein akustisches Signal auf einem ersten Signalpfad (8) mehrfach reflektiert wird, wobei das Messrohr (2) zumindest einen Anschlussstutzen (17) und/oder zumindest eine ebene Funktionsfläche (7, 9) zur Anordnung und ggf. zur Festlegung des Senders und/oder Empfängers (15,16) am oder im Messrohr (2) aufweist, wobei die Reflexionsflächen (6.1-6.5) und der zumindest eine Anschlussstutzen (17) und/oder die zumindest eine ebene Funktionsfläche (7, 9) integral aus der Messrohrwandung (11) ausgeformt sind,
**dadurch gekennzeichnet, dass**
das Messrohr einem Innenhochdruckumformverfahren unterzogen wird,
wobei eine Außenkontur bereitgestellt wird,
wobei eine Messrohrwandung (11) des Messrohrs gegen die Außenkontur angepresst wird,
wobei die Reflexionsflächen (6.1 - 6.5) durch Umformung des Messrohrs mittels des Innenhochdruckverfahrens hergestellt sind.

2. Verfahren nach Anspruch 1,
**dadurch gekennzeichnet, dass**
die Reflexionsflächen (6.1-6.5) zur Reflexion des akustischen Signals derart ausgerichtet sind, dass mehrere der Reflexionsflächen (6.1-6.5) zumindest teilweise in die Grundform des Messrohres (2) hineinragen und mehrere der Reflexionsflächen (6.1-6.5) zumindest aus der Grundform des Messrohres (2) nach außen hervorstehen.

3. Verfahren, nach einem der vorhergehenden Ansprüche,
**dadurch gekennzeichnet, dass**
die Reflexionsflächen (6.1-6.5) in die Messrohrwandung (11) eingeformt sind, derart, dass eine Mehrfachreflexion im Messrohr (2) erfolgt, wobei der Signalpfad (8) an zumindest drei in axialer Richtung hintereinander angeordneten Reflexionsflächen (6.1-6.5) reflektiert wird.

4. Verfahren, nach einem der vorhergehenden Ansprüche,
**dadurch gekennzeichnet, dass**
die Reflexionsfläche oder die Reflexionsflächen (6.1-6.5) eben oder konvex mit einer Reflexionsflächenkrümmung ausgebildet ist, wobei die Kontur der Reflexionsflächenkrümmung sich von einer Krümmung der Messrohrwandung (11) und sich insbesondere durch die unterschiedlich Kreisbogenlänge bei gleichbleibenden Kreiswinkel unterscheidet oder durch einen Mittelpunktswinkel unterscheidet, welcher einen Scheitelpunkt aufweist, welcher nicht auf der Messrohrachse liegt.

5. Verfahren, nach einem der vorhergehenden Ansprüche, **dadurch gekennzeichnet, dass** die zumindest eine ebene Funktionsfläche (7, 9) durch ein Innenhochdruck-Umformverfahren aus dem Messrohr (2) ausgeformt ist.

6. Verfahren, nach Anspruch 5, **dadurch gekennzeichnet, dass** die ebene Funktionsfläche (7, 9) vorgesehen ist zur Ankopplung eines Clamp-On Ultraschallwandlers.

7. Verfahren, nach einem der vorhergehenden Ansprüche, **dadurch gekennzeichnet, dass** der Anschlussstutzen (17) aus der ebenen Funktionsfläche (7, 9) mittels eines Fließbohr-Prozesses ausgeformt ist.

8. Verfahren, nach einem der vorhergehenden Ansprüche, **dadurch gekennzeichnet, dass** das Messrohr (2) einen ersten Teilbereich (4) und weitere Teilbereiche (5, 12) aufweist, welche einen größeren Messrohrquerschnitt aufweisen als der erste Teilbereich (4), wobei die Vergrößerung des Messrohrquerschnittes dieser Teilbereiche (5, 12) durch ein Innenhochdruck-Umformverfahren des Messrohres (2) erfolgt.

9. Verfahren, nach einem der vorhergehenden Ansprüche, **dadurch gekennzeichnet, dass** das Messrohr (2) einen ersten Teilabschnitt (4) aufweist, in welchem die Reflexionsflächen (6.1-6.5) angeordnet sind, wobei dieser erste Teilabschnitt (4) eine Grundform mit rotationssymmetrischem oder polygonalem Querschnitt, insbesondere eine zylindrische Grundform aufweist, wobei sich die Grundform über den gesamten Verlauf des ersten Teilabschnittes (4) erstreckt und wobei die Messrohrwandung (11) im Bereich der Reflexionsflächen (6.1-6.5) von seiner Grundform abweicht.

10. Verfahren, nach einem der vorhergehenden Ansprüche, **dadurch gekennzeichnet, dass** das Messrohrwandung (11) aus Metallblech, vorzugsweise mit einer Blechdicke von 1-5 mm, besteht.

11. Verfahren nach einem der vorhergehenden Ansprüche, **dadurch gekennzeichnet, dass** die Reflexionsflächen (6.1-6.5) derart in das Messrohr (2) eingeformt sind, dass eine Ablenkung des Signalpfades (8) derart erfolgt, dass zumindest drei aufeinanderfolgende Teilpfade (8.1-8.6) des Signalpfades (8) jeweils keinen Schnittpunkt mit der Messrohrachse (M) aufweisen.

12. Verfahren, nach einem der vorhergehenden Ansprüche, **dadurch gekennzeichnet, dass** sich der erste Signalpfad (8) aus geraden Teilabschnitten (8.1-8.6) zusammensetzt,
**dadurch gekennzeichnet, dass**
a) jeweils die minimalen Abstände von mindestens drei Teilabschnitten (8.1, 8.3, 8.4) einen Abstand von 0,4-0,6 r zur Messrohrachse (M) aufweisen, wobei r der Innenradius des Messrohres (2) ist;
b) wobei ein erster Teilabschnitt (8.1), welcher eine erste achsparallele Ebene definiert, einen unmittelbar korrespondierenden zweiten Teilabschnitt (8.2) aufweist, welcher eine zweite achsparallele Ebene definiert, beide Ebenen durch eine erste Reflexionsfläche (6.1) verlaufen und die Normalvektoren einen Winkel von weniger als 10° einschließen,
c) wobei ein dritter Teilabschnitt (8.4), welcher eine dritte achsparallele Ebene definiert, einen unmittelbar korrespondierenden vierten Teilabschnitt (8.5, 18.5) aufweist, welcher eine vierte achsparallele Ebene definiert,
wobei beide Ebenen durch eine zweite Reflexionsfläche (6.4) verlaufen und die Normalvektoren einen Winkel von weniger als 10° einschließen.

13. Verfahren, nach einem der vorhergehenden Ansprüche, **dadurch gekennzeichnet, dass** wobei der Verlauf des Signalpfades (8) in axialer Draufsicht ein Vieleck beschreibt, dessen Seitenschnittpunkte innerhalb, auf oder außerhalb des Messrohres (2) liegen.

14. Verfahren nach Anspruch 12 oder 13,
**dadurch gekennzeichnet, dass**
die dritte und ein vierte Reflexionsfläche (6.3, 6.5) auf oder im Messrohr (2) parallel zur Messrohrachse (M) hintereinander angeordnet sind
und
eine fünfte Reflexionsfläche (6.2) und
entweder
i der Sender (15) oder
ii der Empfänger (16) oder
iii eine sechste Reflexionsfläche
auf oder im Messrohr (2) parallel zur Messrohrachse (M) hintereinander angeordnet sind, wobei sich der Signalpfad (8) aus sechs oder weniger geraden Teilpfaden (8.1-8.6) zusammensetzt.

## Claims

1. Procedure for the fabrication of a measuring tube (2) of an ultrasonic flowmeter, wherein the measuring tube has a measuring tube wall (11), a straight measuring tube axis and multiple reflection surfaces (6.1-6.5), at which an acoustic signal is reflected several times on a first signal path (8), wherein the measuring tube (2) has at least one connection socket (17) and/or at least one planar functional surface (7, 9) for the arrangement and, where applicable, the determination of the sender and/or receiver (15, 16) on or in the measuring tube (2),
wherein the reflection surfaces (6.1-6.5) and the at least one connection socket (17) and/or the at least one planar functional surface (7, 9) are formed integrally from the measuring tube wall (11),
**characterized in that**
the measuring tube is subjected to a hydroforming process,
wherein an outer contour is provided,
wherein a measuring tube wall (11) of the measuring tube is pressed against the outer contour,
wherein the reflection surfaces (6.1-6.5) are produced by reshaping the measuring tube using the hydroforming process.

2. Procedure as claimed in Claim 1,
**characterized in that**
the reflection surfaces (6.1-6.5) for reflecting the acoustic signal are arranged in such a way that multiple reflection surfaces (6.1-6.5) at least partially project into the base form of the measuring tube (2), and **in that** multiple reflection surfaces (6.1-6.5) at least protrude outwards out of the base form of the measuring tube (2).

3. Procedure as claimed in one of the previous claims,
**characterized in that**
the reflection surfaces (6.1-6.5) are shaped into the measuring tube wall (11) in such a way that multiple reflection takes place in the measuring tube (2), wherein the signal path (8) is reflected at at least three reflection surfaces (6.1-6.5) arranged behind one another in the axial direction.

4. Procedure as claimed in one of the previous claims,
**characterized in that**
the reflection surface or surfaces (6.1-6.5) are designed as planar or convex with a reflection surface curve, wherein the contour of the reflection surface curve is different from a curve of the measuring tube wall (11) and particularly is different owing to the different length of the arc at a constant inscribed angle, or is different owing to a center angle, which has an apex that is not located on the measuring tube axis.

5. Procedure as claimed in one of the previous claims, **characterized in that** the at least one planar functional surface (7, 9) is formed from the measuring tube (2) by a hydroforming process.

6. Procedure as claimed in Claim 5, **characterized in that** the planar functional surface (7, 9) is provided for the coupling of a clamp-on ultrasonic transducer.

7. Procedure as claimed in one of the previous claims, **characterized in that** the connection socket (17) is formed from the planar functional surface (7, 9) using a flow drilling process.

8. Procedure as claimed in one of the previous claims, **characterized in that** the measuring tube (2) has a first subarea (4) and additional subareas (5, 12), which have a larger measuring tube cross-section than the first subarea (4), wherein the measuring tube cross-section of these subareas (5, 12) is enlarged through a hydroforming of the measuring tube (2).

9. Procedure as claimed in one of the previous claims, **characterized in that** the measuring tube (2) has a first subsection (4) in which the reflection surfaces (6.1-6.5) are arranged, wherein this first subsection (4) has a base form with a rotationally symmetric or polygonal cross-section, particularly a cylindrical cross-section, wherein the base form extends over the entire course of the first subsection (4) and wherein the measuring tube wall (11) deviates from its base form in the area of the reflection surfaces (6.1-6.5).

10. Procedure as claimed in one of the previous claims, **characterized in that** the measuring tube wall (11) is made from sheet metal, preferably having a sheet thickness of 1 to 5 mm.

11. Procedure as claimed in one of the previous claims, **characterized in that** the reflection surfaces (6.1-6.5) are shaped into the measuring tube (2) in such a way that the signal path (8) is deflected in such a way that at least three consecutive subpaths (8.1-8.6) of the signal path (8) do not have an intersection point with the measuring tube axis (M).

12. Procedure as claimed in one of the previous claims, **characterized in that** the first signal path (8) is composed of straight subsections (8.1-8.6),
**characterized in that**
a) the minimum distances, in each case, of at least three subsections (8.1, 8.3, 8.4) have a distance of 0.4 to 0.6 r from the measuring tube axis (M), where r is the inner radius of the measuring tube (2);
b) wherein a first subsection (8.1), which defines a first plane parallel to the axis, has a second subsection (8.2) which corresponds directly, said subsection defining a second plane parallel to the axis, wherein both planes pass through a first reflection surface (6.1) and the normal vectors form an angle of less than 10°,
c) wherein a third subsection (8.4), which defines a third plane parallel to the axis, has a fourth subsection (8.5, 18.5) which corresponds directly, said subsection defining a fourth plane parallel to the axis,
wherein the two planes pass through a second reflection surface (6.4) and the normal vectors form an angle of less than 10°.

13. Procedure as claimed in one of the previous claims, **characterized in that** the course of the signal path (8) in the axial top view describes a polygon, whose lateral points of intersection are in, on or outside the measuring tube (2).

14. Procedure as claimed in Claim 12 or 13,
**characterized in that**
the third and a fourth reflection surface (6.3, 6.5) are arranged behind one another on or in the measuring tube (2), parallel to the measuring tube axis (M) and
**in that** a fifth reflection surface (6.2) and
either
i the sender (15), or
ii the receiver (16), or
iii a sixth reflection surface
are arranged behind one another on or in the measuring tube (2), parallel to the measuring tube axis (M), wherein the signal path (8) is made up of six or fewer straight subpaths (8.1-8.6).

## Revendications

1. Procédé destiné à la fabrication d'un tube de mesure (2) d'un débitmètre à ultrasons,
pour lequel le tube de mesure présente un axe de tube de mesure droit et plusieurs surfaces de réflexion (6.1-6.5), au niveau desquelles un signal acoustique est réfléchi plusieurs fois sur un premier chemin de signal (8), le tube de mesure (2) comportant au minimum un tube de raccordement (17) et/ou au moins une surface fonctionnelle plane (7, 9) pour la disposition ou le positionnement de l'émetteur et/ou du récepteur sur le tube de mesure (2),
les surfaces de réflexion (6.1-6.5) et l'au moins un tube de raccordement (17) et/ou l'au moins une surface fonctionnelle plane (7, 9) étant formés intégralement à partir de la paroi de tube de mesure (11),
**caractérisé**
**en ce que** le tube de mesure est soumis à un procédé de déformation à haute pression intérieure,
un contour extérieur étant mis à disposition,
une paroi (11) du tube de mesure étant pressée contre le contour extérieur,
les surfaces de réflexion (6.1-6.5) étant obtenues par déformation du tube de mesure au moyen du procédé de déformation à haute pression intérieure.

2. Procédé selon la revendication 1,
**caractérisé**
**en ce que** les surfaces de réflexion (6.1-6.5) sont conçues pour la réflexion du signal acoustique de telle sorte que plusieurs parmi les surfaces de réflexion (6.1-6.5) pénètrent au moins partiellement dans la forme de base du tube de mesure (2), et que plusieurs parmi les surfaces de réflexion (6.1-6.5) débordent au moins partiellement vers l'extérieur de la forme de base du tube de mesure (2).

3. Procédé selon l'une des revendications précédentes,
**caractérisé**
**en ce que** les surfaces de réflexion (6.1-6.5) sont formées dans la paroi de tube de mesure (11) de telle sorte qu'une réflexion multiple ait lieu dans le tube de mesure (2), le chemin de signal (8) étant réfléchi sur au moins trois surfaces de réflexion (6.1-6.5) disposées les unes derrière les autres en direction axiale.

4. Procédé selon l'une des revendications précédentes,
**caractérisé en ce que**
la surface de réflexion ou les surfaces de réflexion (6.1-6.5) sont conçues de façon plane ou convexe avec une courbure de la surface de réflexion, le contour de la courbure de la surface de réflexion se distinguant de la courbure de la paroi de tube de mesure (11) et notamment par la longueur distincte de l'arc de cercle à angle de cercle constant, et se distinguant par un angle de centre, lequel présente un sommet qui ne se situe pas sur l'axe de tube de mesure.

5. Procédé selon l'une des revendications précédentes, **caractérisé en ce que** l'au moins une surface fonctionnelle plane (7, 9) est formée par un procédé de déformation à haute pression intérieure à partir du tube de mesure (2).

6. Procédé selon la revendication 5, **caractérisé en ce que** la surface fonctionnelle plane (7, 9) est prévue pour le couplage d'un transducteur à ultrasons de type clamp-on.

7. Procédé selon l'une des revendications précédentes, **caractérisé en ce que** le tube de raccordement (17) est formé à partir de la surface fonctionnelle plane (7, 9) au moyen d'un procédé de fluoperçage.

8. Procédé selon l'une des revendications précédentes, **caractérisé en ce que** le tube de mesure (2) présente un première zone partielle (4) et des zones partielles supplémentaires (5, 12), lesquelles présentent une section de tube de mesure supérieures à la première zone partielle (4), l'agrandissement de la section de tube de mesure de ces zones partielles (5, 12) étant réalisé par un procédé de déformation à haute pression intérieure du tube de mesure (2).

9. Procédé selon l'une des revendications précédentes, **caractérisé en ce que** le tube de mesure (2) présente une première section partielle (4), dans laquelle les surfaces de réflexion (6.1-6.5) sont disposées, cette première section partielle (4) présentant une forme de base avec une section à symétrie de révolution ou polygonale, notamment une forme de base cylindrique, la forme de base s'étendant sur l'étendue complète de la première section partielle (4) et la paroi de tube de mesure (11) divergeant de sa forme de base dans la zone des surfaces de réflexion (6.1-6.5).

10. Procédé selon l'une des revendications précédentes, **caractérisé en ce que** la paroi de tube de mesure (11) est constituée d'une tôle métallique, de préférence avec une épaisseur de tôle de 1 à 5 mm.

11. Procédé selon l'une des revendications précédentes, **caractérisé en ce que** les surfaces de réflexion (6.1-6.5) sont formées dans le tube de mesure (2) de telle sorte qu'une déviation du chemin de signal (8) intervient de telle manière qu'au moins trois chemins partiels consécutifs (8.1-8.6) du chemin de signal (8) ne présentent respectivement aucun point d'intersection avec l'axe de tube de mesure (M).

12. Procédé selon l'une des revendications précédentes, **caractérisé en ce que** le premier chemin de signal (8) se compose de sections partielles droites (8.1-8.6), **caractérisé en ce que**
a) les distances minimales respectives d'au moins trois sections partielles (8.1, 8.3, 8.4) présentent une distance de 0,4 à 0,6 r par rapport à l'axe de tube de mesure (M), r étant le rayon intérieur du tube de mesure (2) ;
b) une première section partielle (8.1), laquelle définit un premier plan parallèle à l'axe, présente une deuxième section partielle (8.2) directement correspondante, laquelle définit un deuxième plan parallèle à l'axe, les deux plans s'étendant à travers une première surface de réflexion (6.1) et les vecteurs normaux formant un angle de moins de 10°,
c) une troisième section partielle (8.4), laquelle définit un troisième plan parallèle à l'axe, présente une quatrième section partielle (8.5, 18.5) directement correspondante, laquelle définit un quatrième plan parallèle à l'axe, les deux plans s'étendant à travers une deuxième surface de réflexion (6.4) et les vecteurs normaux formant un angle de moins de 10°.

13. Procédé selon l'une des revendications précédentes, **caractérisé en ce que** l'allure du chemin de signal (8) en vue de dessus axiale décrit un polygone dont les points d'intersection latéraux se situent à l'intérieur, sur ou à l'extérieur du tube de mesure (2).

14. Procédé selon la revendication 12 ou 13,
**caractérisé**
**en ce que** la troisième et la quatrième surface de réflexion (6.3, 6.5) sont disposées l'une derrière l'autre sur ou dans le tube de mesure (2), parallèlement à l'axe de tube de mesure (M)
et
**en ce qu'**une cinquième surface de réflexion (6.2) et
soit
i l'émetteur (15), soit
ii le récepteur (16), soit
iii une sixième surface de réflexion
est/sont disposé(s) l'un(e) derrière l'autre sur ou dans le tube de mesure (2), parallèlement à l'axe de tube de mesure (M), le chemin de signal (8) se composant d'un maximum de six chemins partiels (8.1-8.6).
